# EUROPEAN PATENT SPECIFICATION

(11) **EP 2 439 131 B1**
(45) Date of publication and mention of the grant of the patent: **23.01.2013**
(21) Application number: 11184141.7
(22) Date of filing: 06.10.2011
(51) Int. Cl.: B62D 35/02

(54) **Air guide plate for the underside of a motor vehicle**
Luftleitplatte an der Unterseite eines Kraftfahrzeuges
Plaque de guidage d'air pour le dessous d'un véhicule automobile

(30) Priority: 06.10.2010 JP 2010226861
(43) Date of publication of application: 11.04.2012
(73) Proprietor: Honda Motor Co., Ltd., Tokyo 107-8556 (JP)
(72) Inventor: Minakami, Kohjiro, Saitama, 351-0193 (JP); Kihara, Makoto, Saitama, 351-0193 (JP); Hasegawa, Akira, Saitama, 351-0193 (JP); Sasaki, Yasuo, Kanagawa, 224-0057 (JP)
(74) Representative: Herzog, Markus

(56) References cited:
- JP-A- 2006 248 355
- JP-A- 2006 327 281
- US-A1- 2009 261 619

## Description

The present invention relates to a diffuser device including an air guide member for guiding air underneath the vehicle body.

Document US 2009/0261619 A1 describes a diffuser device according to the preamble of claim 1.

A certain type of vehicles is provided with an air-guide plate (diffuser) disposed behind a front wheel and located at an outer part of an under guard (floor cover) in a width direction of the vehicle. By thus providing the air guide plate on the under guard, the air entering below the under guard from the front of the vehicle is allowed to partially escape to a lateral side of the vehicle body by the air guide plate. Furthermore, the air guide plate also serves to dam up or prevent the air from entering the underbody from the side of the vehicle body.

By virtue of the air guide plate, the air entering below the under guard from the front of the vehicle is allowed to smoothly flow backward of the vehicle body along a longitudinal centerline of the vehicle body. A stream of air passing through the vehicle underbody along the longitudinal centerline of the vehicle body can thus be maintained and, hence, a lift produced by the airflow can act on the vehicle underbody in a balanced condition between the front and rear of the vehicle body. A typical example of the air guide plate is disclosed in Japanese Patent Application Laid-open Publication (JP-A) No. 2006-248355.

However, because the disclosed air guide plate projects downward from the under guard of the vehicle body, an increased amount of air resistance is generated by the air guide plate during traveling of the vehicle, which will deteriorate the aerodynamic property of the vehicle.

It is therefore an object of the present invention to provide a diffuser device, which is capable of reducing air resistance while keeping a stream of air flowing underneath the vehicle body from the front to the rear of the vehicle along a longitudinal centerline of the vehicle body.

According to the present invention, there is provided a diffuser device including a guide member for guiding air underneath a vehicle body, the air guide member comprising: a fixed part attached to an undersurface of the vehicle body and extending obliquely backward and outwardly in a width direction of the vehicle; and an elastic air guide plate projecting downward from the fixed part, wherein the air guide plate has an end extension projecting outwardly in the vehicle width direction beyond a rear end of the fixed part.

With this arrangement, the air entering below the vehicle body from the front of the vehicle is allowed to partially escape to a lateral side of the vehicle body by the air guide plate. By thus allowing partial escape of the entering air, it is possible to keep a stream of air flowing smoothly from the front to the rear of the vehicle body along a longitudinal centerline of the vehicle body while producing a lift acting on the underside of the vehicle body in a properly balanced condition between the front and the rear of the vehicle body.

Since the air guide plate is elastic and has an end extension projecting outwardly beyond the rear end of the fixed part, when subjected of a stream of air acting on the elastic air guide plate, the end extension is elastically deformable to assume a backwardly deflected position. Backward deflection of the end extension will reduce air resistance created by the air guide member and eventually increases the mileage of the vehicle.

When the vehicle is traveling side-by-side with another vehicle, a crosswind may occur, entering below the undersurface of the vehicle body from a side of the vehicle. When subjected to the crosswind, the end extension of the air guide plate is elastically deformable to assume a backwardly deflected position and thus reduces air resistance created by the effect of the crosswind. This will ensure improved traveling stability of the vehicle.

Preferably, the fixed part is fixed to a recessed portion formed on the undersurface of the vehicle body and opening downward, and the end extension projects outwardly beyond a peripheral edge of the recessed portion and extends below the undersurface of the vehicle body. The recessed portion formed on the undersurface of the vehicle body increases the rigidity of the undersurface and hence insures firm attachment of the air guide member to the undersurface of the vehicle body. Furthermore, because the end extension projects outwardly beyond a peripheral edge of the recessed portion and extends below the undersurface of the vehicle body, the end extension is allowed to undergo elastic deformation without interference with a circumferential wall of the recessed portion. The interference-free elastic deformation of the end extension ensures reliable reduction of air resistance during traveling of the vehicle.

Preferably, the air guide plate has a width in a vertical direction of the vehicle, the width being set to be larger at a rear end of the air guide plate than at a front end of the air guide plate. By thus providing a larger width to the air guide plate at the rear end thereof, the end extension is liable to undergo elastic deformation when subjected to air pressure during traveling of the vehicle. This arrangement ensures that air resistance during traveling of the vehicle can be reduced with increased efficiency.

Preferably, the fixed part is formed of a relatively hard rubber material, and the air guide plate is formed of a relatively soft rubber material, and wherein the fixed part and the air guide plate are integrally molded with each other. The air guide plate formed of a relatively soft rubber material ensures reliable elastic deformation of the end extension when the air guide plate is subjected to air pressure during traveling of the vehicle. Furthermore, the fixed part and the air guide plate that are integrally molded increases the productivity of the air guide member.

Preferably, the fixed part is bolted to the undersurface of the vehicle body. The fixed part formed of a relatively hard rubber material ensures firm attachment of the air guide member to the vehicle body when the fixed part is bolted to the undersurface of the vehicle body. Furthermore, the fixed part, which is formed of a relatively hard rubber material and which is bolted to the under surface of the vehicle body, is able to absorb vibration caused due to elastic deformation of the air guide plate.

Preferably, the fixed part has a rear end edge and the end extension of the air guide plate has an upper edge, wherein the rear end edge of the fixed part and the upper edge of the end extension are continuously connected by an arcuate edge shaped into a smooth concavely curved arcuate configuration. With this arrangement, it is possible to prevent stress concentration which may otherwise occur at a junction between the rear end edge of the fixed part and the upper edge of the end extension of the air guide plate.
Fig. 1 is a front view of a vehicle provided with a diffuser device according to the present invention;
Fig. 2 is a bottom view of the vehicle shown in Fig. 1;
Fig. 3 is an enlarged view of a portion designated by 3 in Fig. 2
Fig. 4 is a perspective view of a left air guide means of the diffuser device;
Fig. 5 is an exploded perspective view showing the left air guide means of Fig. 4;
Fig. 6 is a cross-sectional view taken along line 6-6 of Fig. 4;
Fig. 7 is a front view, with parts in cross-section, of an end extension of the left air guide means shown in Fig. 4;
Fig. 8 is a perspective view of the end extension of Fig. 7;
Fig. 9A and 9B are views illustrative of the manner in which air is guided by the diffuser device according to the present invention;
Fig. 10 is a view similar to Fig. 6, but showing a manner in which vibration caused due to elastic deformation of the left air guide means of the diffuser device is absorbed by bolts; and
Figs. 11A and 11B are views illustrative of the manner in which the diffuser device operates to resist entrance of a crosswind.

A preferred structural embodiment of the present invention will be described below in detail with reference to the accompanying sheets of drawings. In the drawings, reference characters Fr, Rr, L and R are used to refer to a forward direction, rearward direction, leftward direction, and rightward direction, respectively, as viewed from the driver.

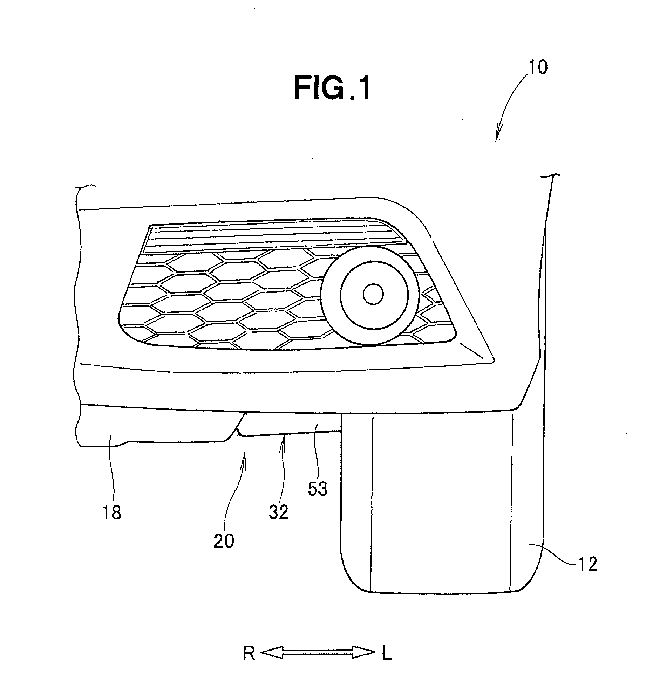

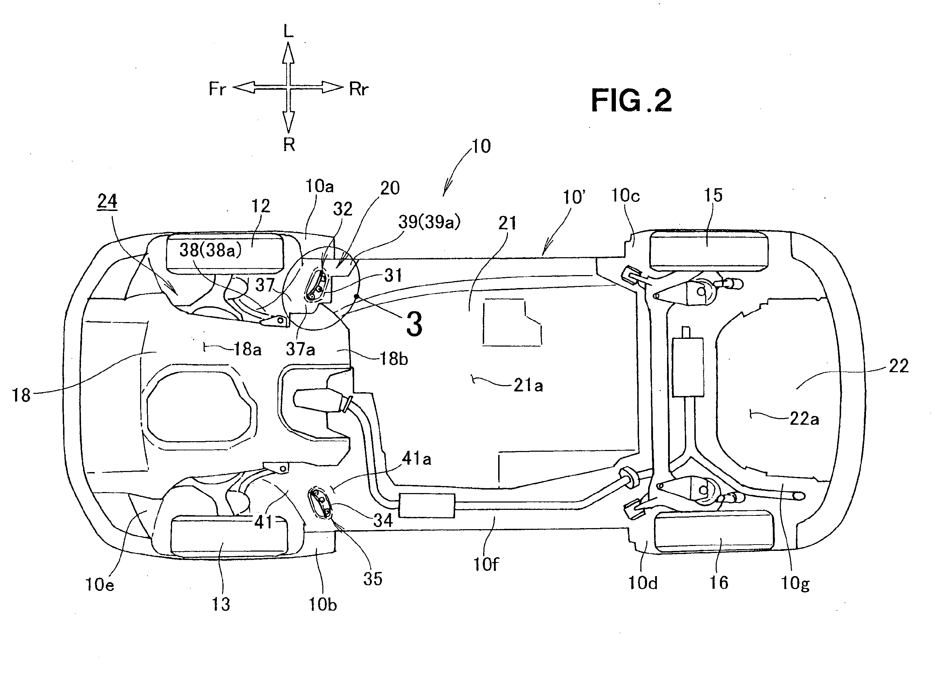

As shown in Figs. 1 and 2, a vehicle 10 includes left and right front wheels 12, 13 provided on front left and right sides 10a, 10b of the vehicle 10, left and right rear wheels 15, 16 provided on rear left and right sides 10c, 10d of the vehicle 10, a front under guard 18 provided on a front lower part 10e of a vehicle body 10', a diffuser device 20 provided on the vehicle body front lower part 10e, a center under guard 21 provided on a central lower part 10f of the vehicle 10', and a rear under guard 21 provided on a rear lower part 10g of the vehicle body 10'.

The front under guard 18 is a guard, which is provided between the left front wheel 12 and the right front wheel 13 and covers an engine room 24 from below. The center under guard 21 is a guard, which is disposed rearwards of the front under guard 18 and the diffuser 20 and covers a floor part of a vehicle passenger compartment. The rear under guard 22 is a guard, which is disposed rearwards of the center under guard 21 and covers a bottom portion of a trunk room.

The front under guard 18, center under guard 21 and rear under guard 22 are configured to have respective undersurfaces 18a, 21a and 22a, which lie substantially flush with one another, and which form an undersurface of the vehicle body 10'. With this arrangement, the air entering below the undersurface 18a of the front under guard 18 from a front lower end of the vehicle body 10' is allowed to flow backward of the vehicle body 10' successively through the center under guard 21 and the rear under guard 22.

The diffuser device 20 includes a left air guide means 32 provided on a left mounting portion (vehicle body) 31 located adjacent to a rear end portion 18b of the front under guard 18 on the vehicle front lower part 10e, and a right air guide means 35 provided on a right mounting portion (vehicle body) 34 adjacent to the rear end portion 18b of the front under guard 18 on the vehicle front lower part 10e.

The left mounting portion 31 is provided on a bottom surface (undersurface of the vehicle body) 37a of a left side outrigger 37. The left side outrigger 37 is a member used to connect a rear end portion 38a of a left side frame 38 and a front end portion 39a of a left side sill. The left side frame 38 is a frame, which extends in a longitudinal direction of the vehicle body 10' along a left side of the engine room 24. The left side sill is a member, which extends in the longitudinal direction of the vehicle body 10' along a left side of the vehicle passenger compartment.

The right mounting portion 34 is provided on a bottom surface (undersurface of the vehicle body) 37a of a right side outrigger 41 disposed on a right side of the vehicle body 10'. The right mounting portion 34 is bilaterally symmetric with the left mounting portion 31 about a longitudinal centerline (no shown) of the vehicle body 10'. The right side outrigger 41 is also bilaterally symmetric with the left side outrigger 37.

The left and right air guide means 32, 35 are bilaterally symmetric with each other and, hence, only the left air guide means 32 will be described below.

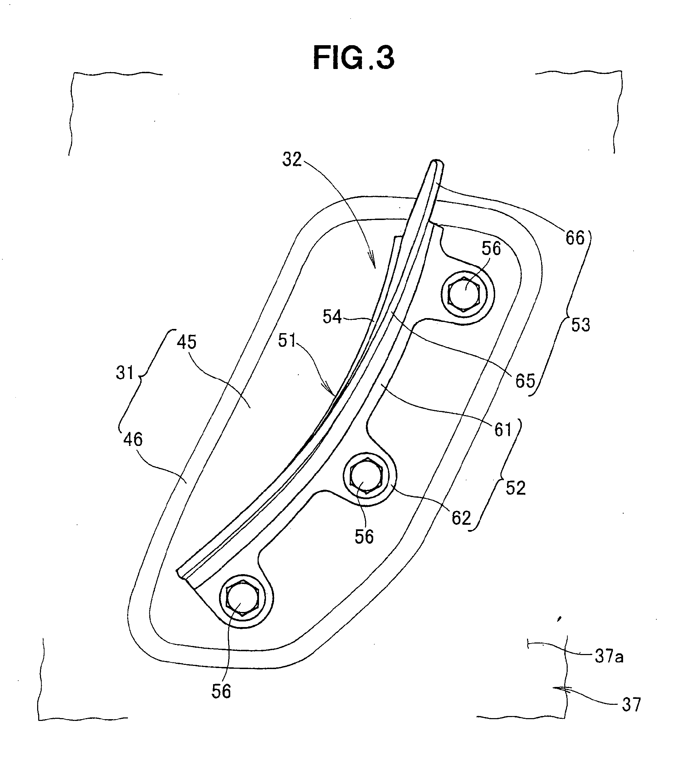

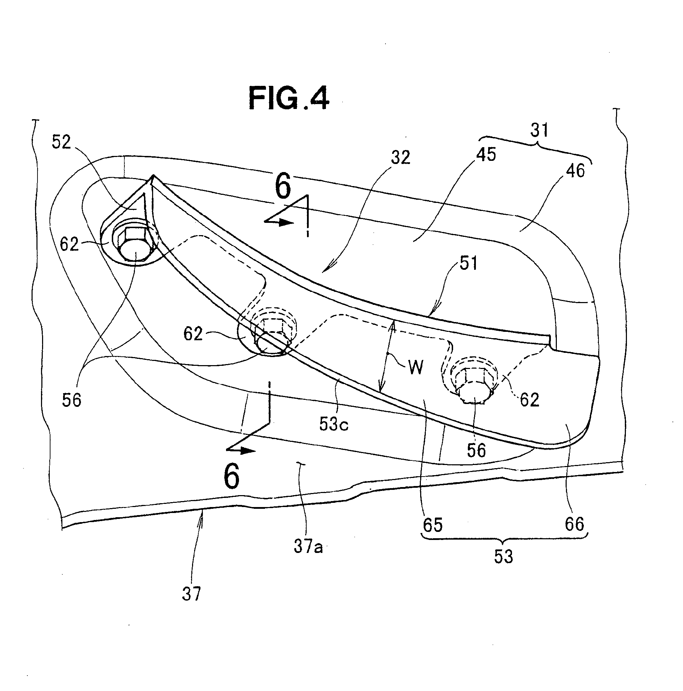

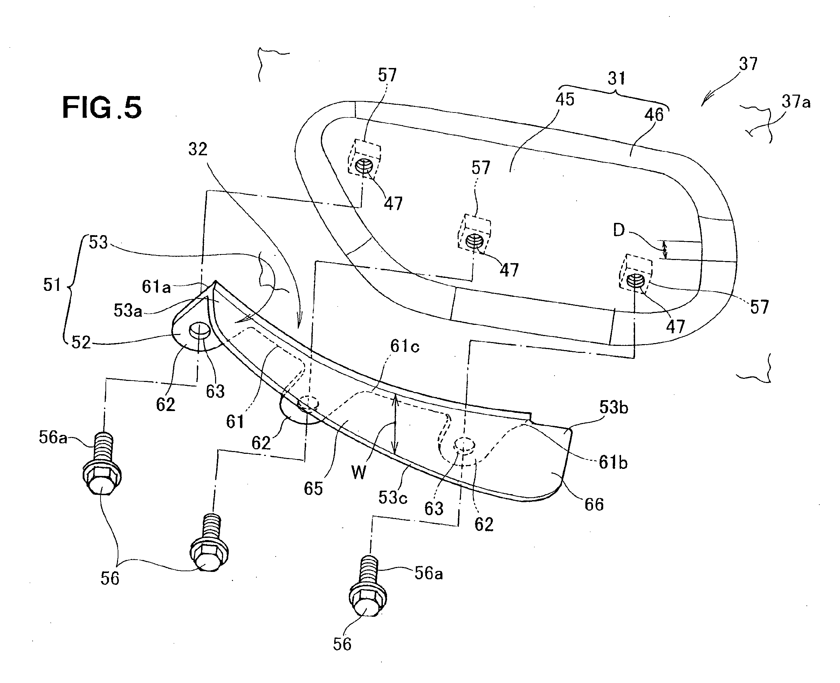

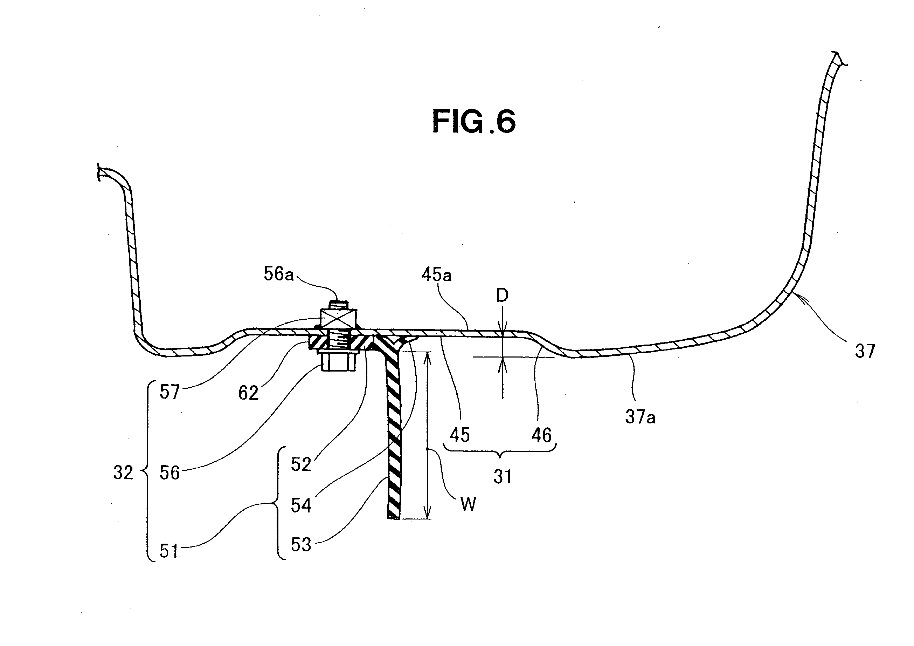

As shown in Figs. 3 and 4, the left mounting portion 31 is a recessed portion formed on the bottom surface 37a of the left side outrigger 37. As best shown in Figs. 5 and 6, the recessed left mounting portion 31 includes a top wall 45 of a generally rectangular shape, and a circumferential wall 46 connecting a peripheral edge of the top wall 45 and the bottom surface 37a of the left side outrigger 37. The recessed left mounting portion 31 is upwardly concaved and hence opens downwards, and it has a depth D, which is a distance from the bottom surface 37a of the left side outrigger 37 and the top wall 45 of the recessed left mounting portion 31. The bottom surface 37a of the left side outrigger 37 forms a part of the undersurface of the vehicle body 10'.

By virtue of the upwardly concaved shape, the left mounting portion 31 can possesses an increased level of rigidity. The top wall 45 of the recessed left mounting portion 31 has a plurality of attachment holes 47 formed therein, and a plurality of weld nuts 57 is attached by welding to a back surface 45a (Fig. 6) of the top wall 45 in such a manner that each of the weld nuts 57 is coaxial with a respective one of the attachment holes 47.

The left air guide means 32 includes a left air guide part or member 51 for guiding air which has enter below the undersurface 18a of the front under guard 18 (undersurface of the vehicle body 10') from the front end of the vehicle, and plural sets of bolts 56 and weld nuts 57 that are provided to attach the left air guide member 51 to the left mounting portion 31.

The left air guide member 51 is a member, which guides a part of the entering air from the underside of the front under guard to a lateral outer side of the vehicle body 10'. The left air guide member 51 includes a fixed part 52 fixed (or attached) to the top wall 45 of the recessed left mounting portion 31 by means of screw fasteners composed of the bolts 56 and the weld nuts 57, and an air guide plate 53 projecting downward from the fixed part 52, and a lip 54 provided at a base portion of the air guide plate 53. With the lip 54 thus provided at the base portion of the air guide plate 53, the air guide plate 53 can be held stably and reliably in a downwardly projecting condition relative to the fixed part 52.

The fixed part 52 of the left air guide member 51 is a member, which is formed by a relatively hard rubber material. Use of the relatively hard rubber material allows the fixed part 52 to be firmly secured to the left mounting portion 31. Furthermore, because the recessed left mounting portion 31 has an increased level of rigidity as previously discussed, securing the fixed part 52 to such rigid recessed left mounting portion 31 will ensure firm attachment of the left air guide member 51 to the left mounting portion 31.

The fixed part 52 includes a support portion 61 extending obliquely backward and outwardly in a vehicle width direction, and a plurality of attachment lugs 62 provided on the support portion 61 at predetermined intervals in a longitudinal direction of the support portion 61. The support portion 61 has a front end 61a and a rear end 61b which is located on an outer side of the front end 61a in the vehicle width direction. The support portion 61 is curved into an arcuate shape, which is convex in a rearward direction of the vehicle body 10'.

The attachment lugs 62 protrude from the front end 61a, the rear end 61b and a longitudinally central part 61c, respectively, of the support portion 61 in a rearward direction of the vehicle body 10'. Each of the attachment lugs 62 has an attachment hole 63. When the attachment lugs 62 are placed in an attachment position on the top wall 45 of the recessed left mounting portion 31, each of the mounting holes 63 is aligned with a corresponding one of the attachment holes 47 formed in the top wall 45. Externally threaded shanks of the bolts 56 are inserted into the attachment holes 63 of the attachment lugs 62 and the attachment holes 47 of the top wall 45 of the recessed left mounting portion 31 and then they are threaded into the weld nuts 57 until the attachment lugs 62 (of the fixed part 52) are firmly attached to the top wall 45 of the recessed left mounting portion 31 by means of the bolts 56 and weld nuts 57.

As shown in Figs. 4 to 6, the air guide plate 53 of the left air guide member 51 is a member, which is formed of a relatively soft rubber material and has elasticity. Use of the relatively soft rubber material allows the air guide plate 53 to undergo elastic deformation when subjected to an airflow created during traveling of the vehicle. The air guide plate 53 and the fixed part 52 are integrally molded by, for example, a double-molding process. By thus integrally molding the fixed part 52 and the air guide plate 53, it is possible to produce the left air guide member 51 with increased productivity. It will be appreciated that rubber material used for forming the fixed part 52 has a hardness greater than a hardness of the rubber material used for forming the air guide plate.

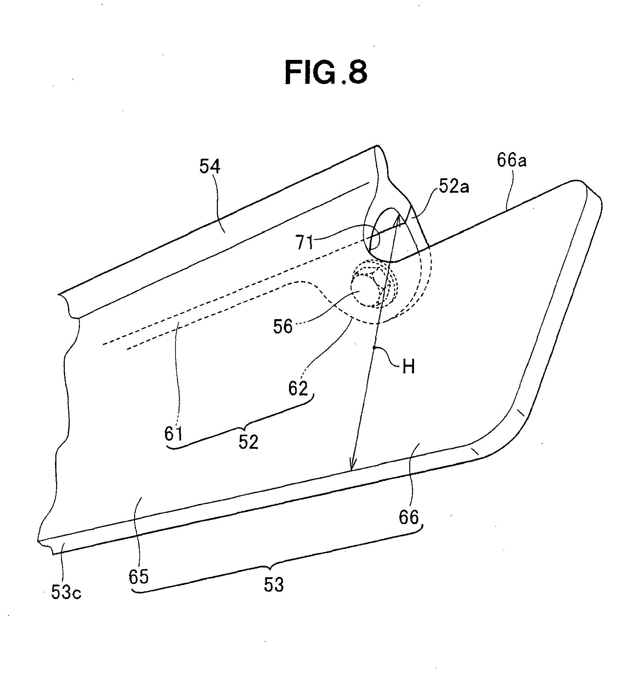

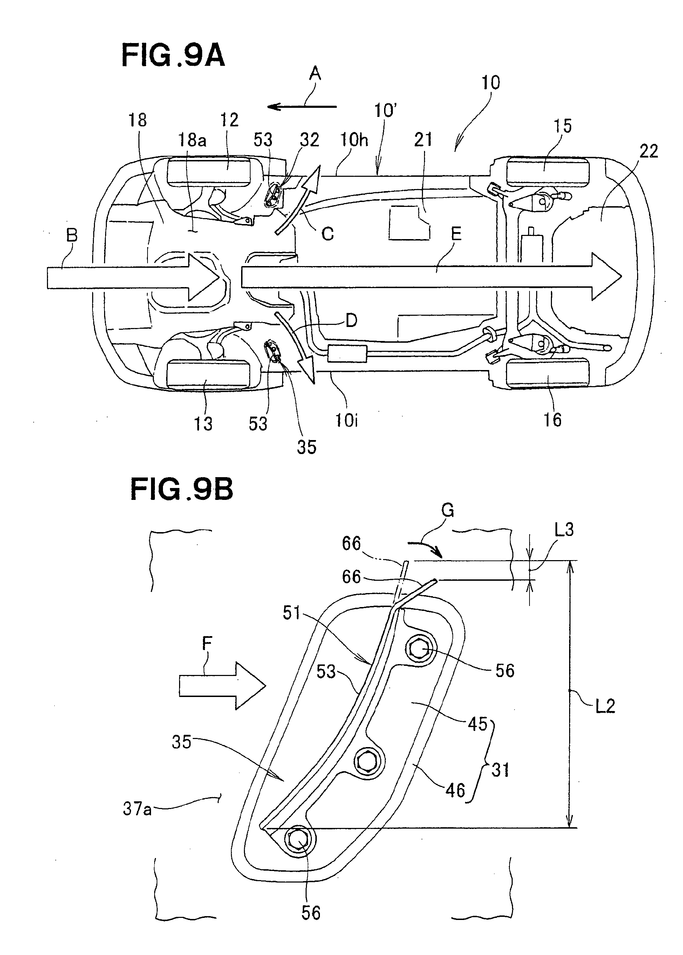

The air guide plate 53 has a front end 53a and a rear end 53b which is located on an outer side of the front end 53a in the vehicle width direction. The air guide plate 53 is curved into an arcuate shape, which is convex in the rearward direction of the vehicle body 10'. The air guide plate 53 has a width W in a vertical direction of the vehicle, the width W being is set to increase gradually in a direction from the front end 53a to the rear end 53b of the air guide plate 53. In other words, the width W of the air guide plate 53 is set to be larger at the rear end 53b than at the front end 53a of the air guide plate 53. The width W of the air guide plate 53 is equal to a distance H (Figs. 8 and 9) between the fixed part 52 and a lower edge 53c of the air guide plate 53.

Furthermore, the air guide plate 53 has an elongate body 65 projecting downward from the support portion 61 and having the same length as the support portion 61, and an end extension 66 projecting outwardly in the vehicle width direction from the rear end 61b of the support portion 61. The end extension 61 is a part including the rear end 53b of the air guide plate 53 and has an apparent width W, which is set to be greater than a maximum width W of the body 65 of the air guide plate 53. As previously described, the width W of the air guide plate 53 is equal to the distance H (Figs. 8 and 9) between the fixed part 52 and the lower edge 53c of the air guide plate 53. By thus setting the width W of the end extension 66, the end extension 66 is liable to undergo elastic deformation when subjected to a stream of air during traveling of the vehicle. This arrangement ensures that air resistance created during traveling of the vehicle can be reduced with increased efficiency.

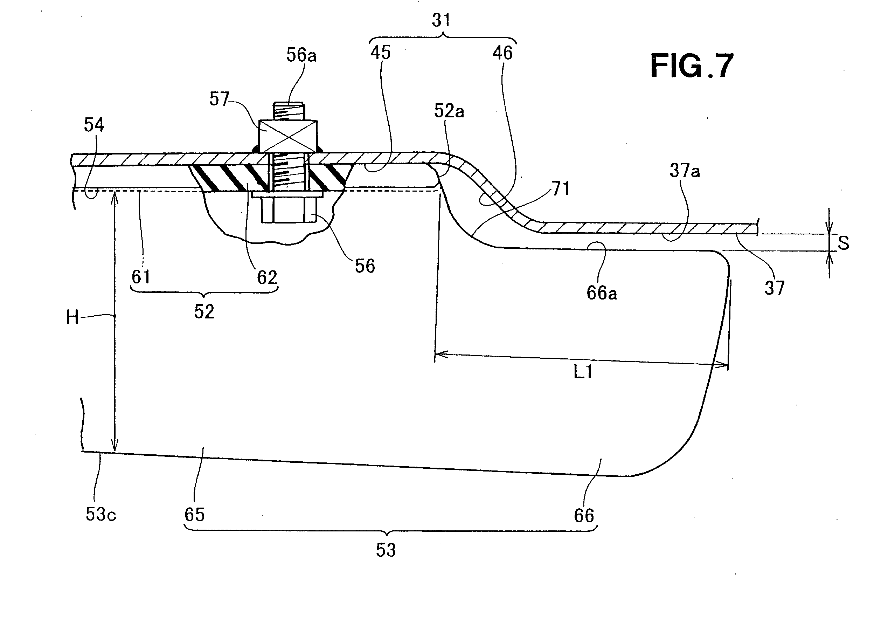

As shown in Figs. 7 and 8, the end extension 66 of the air guide plate 53 is extended to project from the rear end edge 52a of the fixed part 52 by a distance L1 so that the end extension 66 projects outwardly from a peripheral edge (lower edge of the circumferential wall 46) of the recessed left mounting portion 51 while an upper edge 66a of the end extension 66 extends below and substantially parallel to the bottom surface 31a of the left side outrigger 37 with a predetermined space S defined therebetween. With this arrangement, since the end extension 66 projects outwardly beyond the peripheral edge of the recessed left mounting portion 31 while the space S is kept between the upper edge 66a thereof and the bottom surface 37a of the left side outrigger 37, the end extension 66 is allowed to undergo elastic deformation without interference with the circumferential wall 46 of the recessed left mounting portion 31. By virtue of the interference-free elastic deformation of the end extension 66, air resistance created during traveling of the vehicle 10 can be reduced with increased efficiency.

The upper edge 66a of the end extension 66 and the rear end edge 52a of the fixed part 52 are continuously connected by an arcuate edge 71, which is an edge shaped into a smooth concavely curved arcuate configuration. By virtue of the smooth concavely curved arcuate edge 71 used to interconnect the rear end edge 52a of the fixed part 52 and the upper edge 66a of the air guide plate 66, it is possible to prevent stress concentration which may otherwise occur at a joint portion between the rear end edge 52a of the fixed part 52 and the upper edge 66a of the end extension 66 due to elastic deformation of the end extension 66. The left air guide member 51 is thus made highly durable.

As thus far described, the diffuser device 20 according to the present invention includes an air guide member 51 having a fixed part 52 provided on an undersurface 37a of the vehicle body 10' and extending obliquely backward and outwardly in a vehicle width direction, and an air guide plate 53 projecting downwardly from the fixed part 51. With this arrangement, the air entering below the undersurface of the vehicle body 10' from the front end of the vehicle is allowed to partially escape to a lateral outer side of the vehicle body 10' by the air guide plate 53. With this partial escape of the entering air, the entering air can flow smoothly through the underside of the vehicle body 10' from the front to the rear of the vehicle 10 along a longitudinal centerline of the vehicle body 10'. As a result, a stream of air flowing underneath the vehicle body 10' from the front end to the rear of the vehicle along the longitudinal centerline of the vehicle can be maintained stably and reliably during traveling of the vehicle.

Furthermore, the air guide plate 53 is elastic and has an end extension 66 projecting outwardly in the vehicle width direction by a distance L1 from a rear end edge 52a of the fixed part 52. With this arrangement, when subjected to a stream of air during forward traveling of the vehicle, the end extension 66 can undergo elastic deformation to assume a backwardly deflected position and hence lowers air resistance created during traveling of the vehicle. Reduction of the air resistance will lead to an improved mileage of the vehicle.

Operation of the diffuser device 20 will be described in greater detail with reference to Figs. 9A and 9B.

When the vehicle 10 is traveling forward as indicated by the arrow A shown in Fig. 9A, the air enters below the undersurface 18a of the front under guard 18 from the front end of the vehicle 10, as indicated by the profiled arrow B. In this instance, by virtue of the air guide plate 53 of the left air guide means 52, the entering air is allowed to partially escape from the underside of the vehicle body 10' to a left side 10h of the vehicle body 10' as indicated by the profiled arrow C. At the same time, by virtue of the air guide plate 53 of the right air guide means 35, the entering air is allowed to partially escape from the underside of the vehicle body 10' to a right side 10i of the vehicle body 10' as indicated by the profiled arrow D. By thus allowing partial escape of the entering air from the underside of the vehicle body 10' to the left and right sides 10g, 10i of the vehicle body 10', the entering air can flow downstream of the undersurface 18a of the vehicle body 10' while keeping an appropriate flow quantity.

The air entering below the undersurface 18a of the front under guard 18 from the front end of the vehicle body 10' is therefore allowed to smoothly flow backward of the vehicle body 10' successively through the center under guard 21 and the rear under guard 22 along the longitudinal centerline of the vehicle body 10' as indicated by the profiled arrow E show in Fig. 9A. By virtue of the airflow passing through the underside of the vehicle body 10' along the longitudinal centerline of the vehicle body 10', it is possible to provide a good lift balance between the front and the rear of the vehicle body 10'.

As shown in Fig. 9B, during forward traveling of the vehicle 10, the left air guide plate 53 is subjected to a stream of air acting in the direction of arrow F and the end extension 66 is caused to elastically deform or deflect in a rearward direction of the vehicle body 10' as indicated by the arrow G under the pressure of the airflow. The end extension 66, as it is in the backwardly deflected state, can reduce the length L2 of the air guide plate 53 by a distance L3 as measured in the vehicle width direction. By thus reducing the length of the left air guide plate 53 as measured in the vehicle width direction, it is possible to reduce air resistance created by the left air guide plate 53 during traveling of the vehicle. The reduction of the air resistance will lead to an improved mileage of the vehicle.

As previously described with reference to Figs. 7 and 8, the upper edge 66a of the end extension 66 is connected to the rear end edge 52 of the fixed part 52 by the arcuate edge 71. By thus providing the arcuate edge 71, it is possible to prevent stress concentration which may otherwise occur at a junction between the rear end edge 52a of the fixed part 52 and the upper edge 66a of the end extension 66 when the end extension 66 is elastically deformed or deflected backward as indicated by the arrow G shown in Fig. 9B. The left air guide member 51 is therefore free from stress concentration and has improved durability.

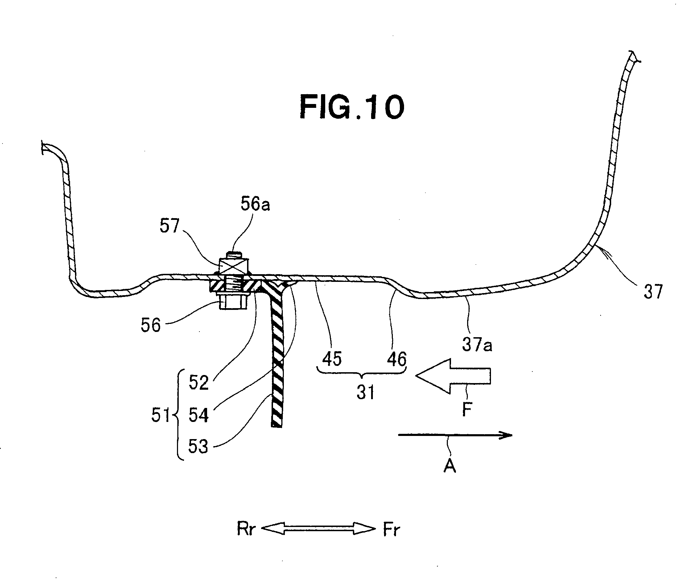

Referring next to Fig. 10, a description will be made about a manner in which vibration caused due to elastic deformation of the left air guide plate 53 (including the end extension) can be absorbed by the fixed part 52.

When the vehicle 10 (see Fig. 9A) is traveling forward as indicated by the arrow A shown in Fig. 10, the elastic air guide plate 53 including the end extension 66 is subjected to a stream of air acting in the direction of the arrow F and the end extension 66 may undergo elastic deformation and cause vibration of the air guide plate 53. In this instance, because the fixed part 52 of the left air guide member 51 is formed of a relatively hard rubber material, the left air guide member 51 can be firmly attached to the recessed mounting portion 31 of the undersurface of the vehicle body 10' merely by securing the attaching lugs 62 of the fixed part 52 to the top wall 45 of the recessed mounting portion 31 by using the bolts 56 and the weld nuts 57. The fixed part 52, which is formed of a rubber material harder than the rubber material of the air guide plate 53 and which is bolted to the recessed mounting portion of the vehicle body 10', can absorb vibration caused due to elastic deformation of the air guide plate 53.

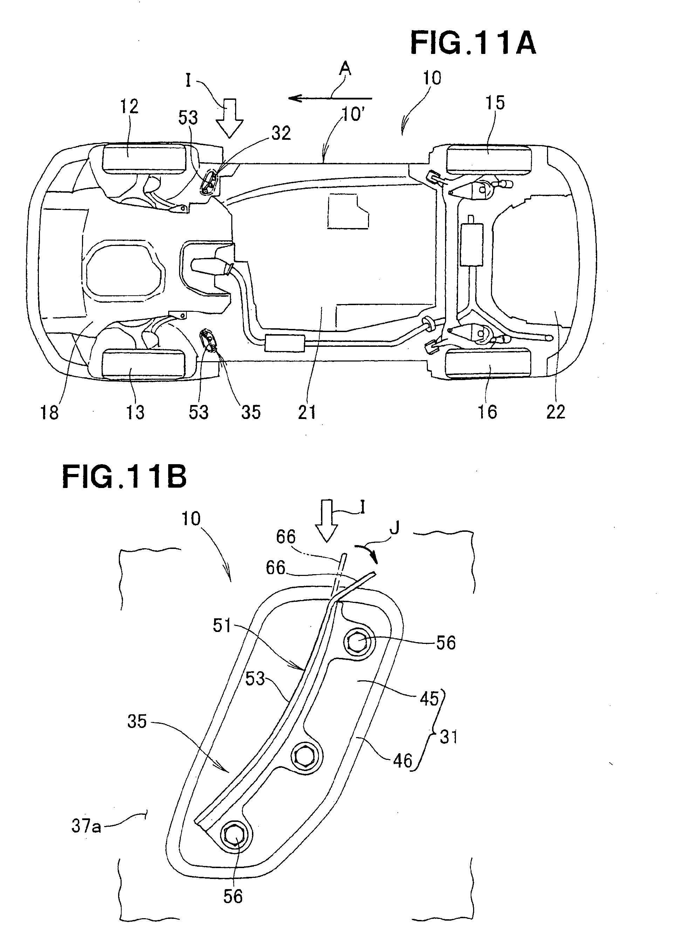

The diffuser device 20 of the present invention can properly deal with a problem that may occur when the vehicle is subjected to a crosswind, as will become apparent from a description given below with reference to Figs. 11A and 11B.

When the vehicle 10 is traveling side-by-side with another vehicle, a crosswind may occur as indicated by the profiled arrow I shown in Fig. 11A. The crosswind acts on the left side of the vehicle body 10' and tends to enter the underside of the vehicle body 10' from the left side of the vehicle 10. In this instance, the crosswind impinges on the air guide plate 53 of the left air guide member 51 (Fig. 11B) and may cause the end extension 66 to elastically deform or deflect backward as indicated by the arrow J shown in Fig. 11B. By virtue of the backward deflection of the end extension 66, air resistance created by the effect of the crosswind can be reduced and a stable traveling of the vehicle can be achieved.

With the arrangements so far described, the present invention can be used advantageously as a diffuser device including an air guide member provided on the undersurface of a vehicle for guiding airflow underneath the vehicle body.

A diffuser device includes an air guide member (51) for guiding air underneath a vehicle body. The air guide member has a fixed part (52) attached to an undersurface (37a) of the vehicle body and extending obliquely backward and outwardly in a width direction of the vehicle, and an elastic air guide plate (53) projecting downward from the fixed part. The air guide plate has an end extension (66) projecting outwardly in the vehicle width direction beyond a rear end of the fixed part. When subjected to a stream of air during forward traveling of the vehicle, the end extension of the air guide plate is elastically deformable to deflect backward, thereby reducing air resistance of the air guide member.

## Claims

1. A diffuser device (20) including a guide member (51) for guiding air underneath a vehicle body (10'), the air guide member (51) comprising:
a fixed part (52) attached to an undersurface (37a) of the vehicle body (10') and extending obliquely backward and outwardly in a width direction of the vehicle (10); and
an elastic air guide plate (53) projecting downward from the fixed part (52), **characterized in that** the air guide plate (53) has an end extension (66) projecting outwardly in the vehicle width direction beyond a rear end of the fixed part (52).

2. The diffuser device according to claim 1, wherein the fixed part (52) is fixed to a recessed portion (31) formed on the undersurface (37a) of the vehicle body (10') and opening downward, and the end extension (53) projects outwardly beyond a peripheral edge of the recessed portion (31) and extending below the undersurface (37a) of the vehicle body (10').

3. The diffuser device according to claim 1 or 2, wherein the air guide plate (53) has a width (W) in a vertical direction of the vehicle, the width (W) being set to be larger at a rear end (53a) of the air guide plate (53) than at a front end (53a) of the air guide plate (53a).

4. The diffuser device according to any one of claims 1 to 3, wherein the fixed part (52) is formed of a relatively hard rubber material, and the air guide plate (53) is formed of a relatively soft rubber material, and wherein the fixed part (52) and the air guide plate (53) are integrally molded with each other.

5. The diffuser device according to claim 4, wherein the fixed part (52) is bolted to the undersurface (37a) of the vehicle body (10').

6. The diffuser device according to any one of claims 1 to 5, wherein the fixed part (52) has a rear end edge (52a) and the end extension (66) of the air guide plate (53) has an upper edge (66a), and wherein the rear end edge (52a) of the fixed part (52) and the upper edge (66a) of the end extension (66) are continuously connected by an arcuate edge (71) shaped into a smooth concavely arcuate configuration.

## Patentansprüche

1. Diffusorvorrichtung (20), die ein Leitelement (51) zum Leiten von Luft unter einen Fahrzeugkörper (10') enthält, wobei das Luftleitelement (51) umfasst:
ein festes Teil (52), das an einer Unterseite (37a) des Fahrzeugkörpers (10') angebracht ist und sich schräg nach hinten und in Breitenrichtung des Fahrzeugs (10) nach außen erstreckt; und
eine elastische Luftleitplatte (53), die von dem festen Teil (52) nach unten vorsteht,
**dadurch gekennzeichnet, dass** die Luftleitplatte (53) eine Endverlängerung (66) aufweist, die in der Fahrzeugbreitenrichtung über ein Hinterende des festen Teils (52) hinaus nach außen vorsteht.

2. Die Diffusorvorrichtung nach Anspruch 1, worin das feste Teil (52) an einem vertieften Abschnitt (31) befestigt ist, der an der Unterseite (37a) des Fahrzeugkörpers (10') ausgebildet ist und sich nach unten öffnet, und die Endverlängerung (53) über einen Umfangsrand des vertieften Abschnitts (31) hinaus außen vorsteht und sich unter die Unterseite (37a) des Fahrzeugkörpers (10') erstreckt.

3. Die Diffusorvorrichtung nach Anspruch 1 oder 2, worin die Luftleitplatte (53) eine Breite (W) in vertikaler Richtung des Fahrzeugs aufweist, wobei die Breite (W) am Hinterende (53a) der Luftleitplatte (53) größer gemacht ist als am Vorderende (53a) der Luftleitplatte (53a).

4. Die Diffusorvorrichtung nach einem der Ansprüche 1 bis 3, worin das feste Teil (52) aus relativ hartem Gummimaterial ausgebildet ist, und die Luftleitplatte (53) aus relativ weichem Gummimaterial ausgebildet ist, und worin das feste Teil (52) und die Luftleitplatte (53) einstückig miteinander geformt sind.

5. Die Diffusorvorrichtung nach Anspruch 4, worin das feste Teil (52) mit der Unterseite (37a) des Fahrzeugkörpers (10') verbolzt ist.

6. Die Diffusorvorrichtung nach einem der Ansprüche 1 bis 5, worin das feste Teil (52) einen hinteren Endrand (52a) aufweist und die Endverlängerung (66) der Luftleitplatte (53) einen oberen Rand (66a) aufweist, und wobei der hintere Endrand (52a) des festen Teils (52) und der obere Rand (66a) der Endverlängerung (66) durch einen bogenförmigen Rand (51), der zu einer glatten konkav bogenförmigen. Konfiguration ausgestaltet ist, kontinuierlich verbunden sind.

## Revendications

1. Dispositif de diffuseur (20) comprenant un organe de guidage (51) permettant de guider l'air en dessous d'une caisse de véhicule (10'), l'organe de guidage d'air (51) comprenant :
une partie fixe (52) fixée à une sous-face (37a) de la caisse de véhicule (10') et s'étendant obliquement vers l'arrière et vers l'extérieur dans un sens de la largeur du véhicule (10) ; et
une plaque de guidage d'air élastique (53) en saillie vers le bas depuis la partie fixe (52), **caractérisé en ce que** la plaque de guidage d'air (53) a une extension d'extrémité (66) en saillie vers l'extérieur dans le sens de la largeur du véhicule au-delà d'une extrémité arrière de la partie fixe (52).

2. Dispositif de diffuseur selon la revendication 1, dans lequel la partie fixe (52) est fixée à une portion évidée (31) formée sur la sous-face (37a) de la caisse de véhicule (10') et s'ouvrant vers le bas, et l'extension d'extrémité (53) est en saillie vers l'extérieur au-delà d'un bord périphérique de la portion évidée (31) et s'étendant sous la sous-face (37a) de la caisse de véhicule (10').

3. Dispositif de diffuseur selon la revendication 1 ou 2, dans lequel la plaque de guidage d'air (53) a une largeur (W) dans une direction verticale du véhicule, la largeur (W) étant établie pour être plus grande à une extrémité arrière (53a) de la plaque de guidage d'air (53) qu'une extrémité avant (53a) de la plaque de guidage d'air (53).

4. Dispositif de diffuseur selon l'une quelconque des revendications 1 à 3, dans lequel la partie fixe (52) est formée d'un matériau en caoutchouc relativement dur, et la plaque de guidage d'air (53) est formée d'un matériau de caoutchouc relativement mou, et dans lequel la partie fixe (52) et la plaque de guidage d'air (53) sont moulées solidairement l'une avec l'autre.

5. Dispositif de diffuseur selon la revendication 4, dans lequel la partie fixe (52) est boulonnée à la sous-face (37a) de la caisse de véhicule (10').

6. Dispositif de diffuseur selon l'une quelconque des revendications 1 à 5, dans lequel la partie fixe (52) comporte un bord d'extrémité arrière (52a) et l'extension d'extrémité (66) de la plaque de guidage d'air (53) comporte un bord supérieur (66a), et dans lequel le bord d'extrémité arrière (52a) de la partie fixe (52) et le bord supérieur (66a) de l'extension arrière (66) sont raccordés de façon continue par un bord arqué (71) formé dans une configuration arquée concave douce.
